# EUROPEAN PATENT APPLICATION

(11) **EP 3 703 239 A1**
(43) Date of publication of application: **02.09.2020**
(21) Application number: 19210633.4
(22) Date of filing: 21.11.2019
(51) Int. Cl.: H02M 7/00, B60L 1/00, H02M 7/155, H02M 7/162, H02J 7/00, H02J 1/10

(54) **ELECTRICAL POWER SYSTEM FOR PULSED LOADS INCLUDING AN ACTIVE RECTIFIER**

(30) Priority: 20.02.2019 US 201916280966
(71) Applicant: Hamilton Sundstrand Corporation, Charlotte, NC 28217-4578 (US)
(72) Inventor: WILHIDE, Matthew L., Cherry Valley, IL 61016 (US)
(74) Representative: Dehns

(57) **Abstract**

An example electrical power system includes a bus current controller configured to adjust a direct current (DC) provided on a DC bus (318), and a plurality of high energy storage modules (HESMs) (324A/C). Each HESM includes at least one energy storage device, and includes a DC/DC converter configured to control charging of the at least one energy storage device from the DC bus and discharging of the at least one energy storage device onto the DC bus. A system controller (334) is configured to control the bus current controller and the plurality of DC/DC converters. A method of controlling an electrical power system is also disclosed.

## Description

### BACKGROUND

### 1. Field

This application relates to electrical power systems, and more particularly, to an electrical power system for vehicles.

### 2. Description of Related Art

Vehicles such as aircraft and infantry fighting vehicles (e.g., "HUMVEEs") often include electrical power systems with an on-board generator that provides electrical power. The generated electrical power is used to power on-board electrical components such as vehicle controls (e.g., ailerons and rudders in the case of an aircraft), sensors, and/or other on-board electrical devices. These items collectively act as a baseline electrical load that requires a baseline amount of electrical power.

The vehicle may also include pulse loads that require supplemental power, causing a spike in the overall load of the electrical system. Some example pulse loads could include a radar or a directed energy weapon. On-board energy storage devices that charge from the generator can be used to provide supplemental power for pulse loads. These architectures use multiple voltage loops to regulate vehicle bus voltage.

The conventional methods and systems have generally been considered satisfactory for their intended purpose. However, there is still a need in the art for voltage regulation having improved stability and reduced weight. The present disclosure may provide a solution for at least one of these remaining challenges.

### SUMMARY

An electrical power system includes a bus current controller for adjusting a direct current (DC) provided on a DC bus, at least one high energy storage module (HESM), including at least one energy storage device, and a DC/DC converter for controlling charging of the at least one energy storage device from the DC bus and discharging of the at least one energy storage device onto the DC bus, and a system controller for controlling the bus current controller and the plurality of DC/DC converters. The rectifier and the DC/DC converter can be integrated in a single LRU with a common power filter.

The electrical power system can include at least one energy storage device of a first of the HESMs can include a first type of energy storage device, and the at least one energy storage device of second of the HESMs can include a second type of energy storage device that is different from the first type of energy storage device. The at least one energy storage device of one of the HESMs can include one or more batteries. The at least one energy storage device of one of the HESMs can also include one or more ultracapacitors.

The electrical power system can include a voltage sensor for measuring a voltage on the DC bus, where the system controller is for controlling the bus current controller and the DC/DC converter based on DC bus voltage measurements from the voltage sensor. The bus current controller can include an active rectifier for rectifying alternating current (AC) from a generator to DC on the DC bus. The active rectifier and DC/DC converter can each utilize the same switching topology.

The active rectifier and the DC/DC converter can each include a plurality of switching legs, each switching leg including a pair of switches and controlling connection of a respective input to the DC bus, wherein the respective inputs of the DC/DC converter each can connect to the DC bus and the respective inputs of the active rectifier can include respective phases of current from the generator.

The electrical power system can include a mounting rack defining a plurality of stacked receiving areas where the DC/DC converter, the system controller, and bus current controller are provided on a plurality of circuit boards, each circuit board mounted in one of the stacked receiving areas.

The electrical power system can include a power filter connected to the DC bus, the power filter can provide electromagnetic interference (EMI) filtering for the DC current on the DC bus.

The system controller can discharge at least one of the HESMs onto the DC bus based on activation of a pulse load connected to the DC bus based on a current on the DC bus exceeding a target current level determined by the system controller.

The DC bus can include a positive rail for providing a positive DC voltage, a negative rail configured to provide a negative DC voltage, and a ground rail. One of the HESMs that includes an energy storage device of a first type can be connected to the positive rail and ground rail, but need not be connected to the negative rail and another of the HESMs can include an energy storage device of the first type that is connected to the negative rail and the ground rail, but not the positive rail.

A method of controlling an electrical power system includes providing direct current (DC) from a source to a DC bus, selectively charging energy storage devices of respective high energy storage modules (HESMs) from the DC bus, selectively discharging the energy storage devices of the respective HESMs onto the DC bus and controlling performance of said energy storage devices by providing, selectively charging, and selectively discharging by a system controller. The method can include providing DC from the source to the DC bus by rectifying alternating current (AC) from a generator to DC using an active rectifier and controlling performance can include the system controller controlling the active rectifier. The method can include detecting activation of a pulse load connected to the DC bus, and discharging at least one of the HESMs onto the DC bus based on the detected activation.

The system controller can utilize a rate limiting function for calculating rate limiting current commands to the active rectifier. The rate limiting function can include a low pass filter, a discrete rate limit or is calculated as a function of available power.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

Fig. 1 is a schematic view of a vehicle that includes an exemplary embodiment of an electrical power system constructed in accordance with the present disclosure;
Fig. 2 is a schematic view of the electrical power system of Fig. 1 showing a split DC bus;
Fig. 3 is a flowchart of a method of controlling an electrical power system in accordance with the present disclosure;
Fig. 4 is a schematic view of an algorithm for controlling the electrical power system of Fig. 1, showing the voltage regulator command; and
Fig. 5 is a schematic view of an algorithm for controlling the electrical power system of Fig. 1, showing the active rectifier current command.

### DETAILED DESCRIPTION

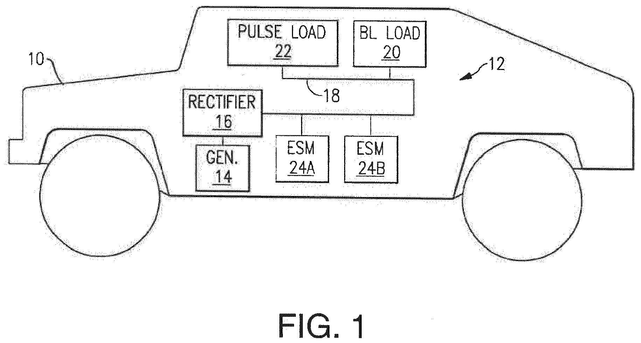

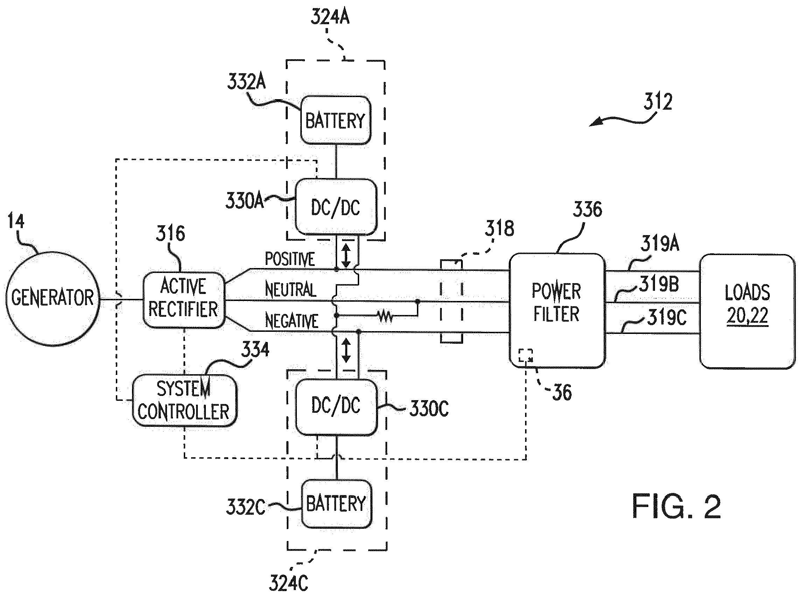

Reference will now be made to the drawings wherein like reference numerals identify similar structural features or aspects of the subject invention. For purposes of explanation and illustration, and not limitation, an example vehicle that includes an electrical power system in accordance with the invention is shown in FIG. 1 and is designated generally by reference character 12. Other aspects of this disclosure are showing in Figs 2-5. The methods and systems of the invention can be used to reduce instability issues and reduce system weights relative to traditional systems.

Fig. 1 is a schematic view of an example vehicle 10 that includes an electrical power system 12. The electrical power system 12 includes a generator 14, rectifier 16, and DC bus 18. The generator 14 converts rotational movement (e.g., of a prime-mover-shaft of the vehicle 10) to electrical power. The rectifier 16 converts alternating current (AC) from the generator 14 to direct current (DC), and provides the DC to the DC bus 18. The rectifier 16 can be an active rectifier. The generator 14 could be a permanent magnet machine or wound field synchronous generator, for example.

A baseline load 20 and one or more pulse loads 22 are powered by the DC bus 18. The baseline load 20 could include vehicle controls, sensors, and/or other electrical devices of the vehicle 10, for example. The pulse load 22 could include one or more of a radar device and a directed energy weapon, or the like. Although a ground vehicle 10 is depicted in Fig. 1, it will be appreciated by those of ordinary skill in the art that the electrical power system 12 is not limited to ground vehicles, and could be used in other environments and vehicles, such as aircraft, space, and marine.

The electrical power system 12 includes a plurality of high energy storage modules (HESMs) 24A-B that are configured to charge from the DC bus 18 in a charging mode, and to act as supplemental power stages by providing supplemental power to the DC bus 18 in a discharging mode when the one or more pulse loads 22 are utilized. Each pulse load 22 needs a relatively large amount of power over a relatively short time duration, and the HESMs 24A-B are able to meet that power demand. Although only two HESMs 24A-B are shown in Fig. 1, it is understood that additional HESMs 24 could be used if desired.

Fig. 2 is a schematic view of an example electrical power system 312 including an active rectifier 316. Each HESM 324 includes a DC/DC converter 330A/C and at least one energy storage device 332A/C. The energy storage devices 332A/C can include a variety of energy storage devices, such as batteries, fuel cells, and ultracapacitors, for example. Ultracapacitors are high-capacity capacitors that can typically store 10 - 100 times more energy per unit volume or mass than electrolytic capacitors.

In one example of Fig. 2, the energy storage device 332A of includes one or more batteries, and the energy storage device 332C o includes one or more ultracapacitors. In other examples, the energy storage devices are the same type of energy storage device.

The DC/DC converters 330A/C are configured to control charging of its energy storage devices 332A/C from the DC bus 318 and to control discharge of its energy storage device 332A/C onto the DC bus 318.

In one example, the voltages of the energy storage devices 332A/C have a lower magnitude than that of the DC bus 318. In such an example, the DC/DC converters 330A/C operate in a buck mode when charging the energy storage devices 332A/C and operate in a boost mode when discharging the energy storage devices 332A/C. In the buck mode, the DC/DC converter 330A/C converts the larger magnitude DC voltage from the DC bus 318 to a lower magnitude DC voltage for charging the energy storage devices 332A/C. This is also known as "sinking" current from the DC bus 318.

In the boost mode, the DC/DC converter 330A/C converts the lower magnitude voltages of the energy storage devices 332A/C to the higher magnitude voltages of the DC bus 318 for discharging the energy storage devices 32A/C onto the DC bus. This is also known as "sourcing current" to the DC bus 318.

A system controller 334 acts as a voltage regulator by controlling the active rectifier 316 to achieve desired DC voltage and DC current levels on the DC bus 318 based on measurements from a voltage sensor 36. The current demand on the DC bus 318 can change based on operation of the loads 20, 22, and the current output by the generator 14 can also change (e.g., based on an engine speed of the vehicle 10). The system controller 334 accommodates these operating conditions by adjusting the output of the active rectifier 316 to achieve a desired DC current and DC voltage on the DC bus 318 for powering the base line load 20. The system controller 334 also selectively discharging the HESMs 324A/C to power the one or more pulse loads 22. In this regard, the generator 14 and HESMs 324A/C function as current sources to support the voltage regulation provided by the system controller 334.

The system controller 334 controls the DC/DC converters 330A/C to control charging and discharging of the HESMs 324A/C. The system controller 334 is configured to maintain a desired state of charge (SoC) of the each energy storage devices 332A/C. SoC refers to a charge level of the energy storage devices 332A/C, and is akin to a fuel gauge for the energy storage devices 332A/C. A SoC is generally measured as a percentage, where a SoC of 0 means that energy storage device 332A/C has no charge i.e. is empty, and a SoC of 100 means that energy storage device 332A/C is fully charged i.e is full. In one example, the system controller 334 seeks to maintain a threshold SoC level, such as 70%, in the energy storage devices 332A/C.

A slew rate refers to how fast a power source can respond to a load demand. A slew rate may be measured in kilowatts / millisecond, for example. The slew rate of the HESMs 324A/C is faster than the slew rate of the rectifier 316. This makes the HESMs 324A/C suitable for powering pulse loads 22 that need a relatively large amount of power over a relatively short time duration. In one example, the slew rate of the active rectifier 316 is on the order of 5 kw/ms and the slew rate of the HESMs is on the order of 300 kw/ms. Ultracapacitors typically have a higher slew rate than batteries.

The system controller 334 is configured to control the active rectifier 316 and DC/DC converters 330A/C based on DC bus voltage measurements from the voltage sensor 36. The system controller 334 uses the voltage sensor 36 as part of a feedback loop so that the system controller 334 can monitor voltage levels on the DC bus and adjust the active rectifier 116 output accordingly. When a pulse load 22 is activated, there is a spike in a power demand on the DC bus 18. The system controller 334 detects this spike, and in one example determines that the active rectifier will only be able to source a portion (e.g., 40%) of the demand. Based on the determination, the system controller 334 commands the DC/DC converters 330A/C of HESMs 324A/C to discharge onto the DC bus to meet the remaining load demand of the pulse load 22.

The system controller 334 also controls when the DC/DC converters 330A/C charges their respective energy storage devices 332A/C from the DC bus 318. In one example, the system controller 334 commands the DC/DC converters 330A/C to charge their respective energy storage devices 332A/C when an actual current on the DC bus 318 exceeds a target current level and/or when the SoC of the HESMs is below a threshold level. In one example, the system controller 334 includes a field-programmable gate array (FPGA), a microprocessor (e.g., a digital signal processor "DSP"), or a combination thereof.

The same system controller 334 is used to control the active rectifier 316 and the DC/DC converters 330A/C. In the traditional system, separate controllers have been used for an active rectifier and HESM DC/DC converters, with each controller using its own control loop, and with the active rectifier being tuned to match the considerably slower response of a vehicle engine while an HESM serviced loads requiring a quicker response time (also known as "high bandwidth" loads). This led to redundancies, complex control algorithms, and use of a feature called "voltage trimming" whereby if the active rectifier controller wanted the HESMs 324A/C to discharge, it would intentionally "trim" the voltage on the DC bus 318 to a lower value to cause the HESMs 324A/C to discharge. Such voltage trimming is not necessary with the system controller 334, because the system controller 334 is and can directly cause the DC/DC converters 330A/C to discharge without the need for voltage trimming.

The improved coordination provided by the system controller 334 can also prevent other issues previously encountered due to use of separate controllers. In traditional systems, the controllers sometimes competed with each other such that the active rectifier controller would unnecessarily try to boost its output to meet a load demand on the DC bus that could have been met by an HESM. By using the system controller 334, such conflicts can be avoided.

The system controller 334 also helps avoid potential instability issues. If separate controllers are used, and an erroneous sensor reading is received indicating a pulse load demand, an HESM could potentially discharge unnecessarily and cause a surge on the DC bus. Such an event is less likely when the system controller 334 is used.

The voltage sensor 36 is part of a power filter 336 that provides for electromagnetic interference (EMI) filtering of the DC current on the DC bus 318. In the example of Fig. 2, the power filter 338 is connected to the DC bus 318 at a location between that of the plurality of HESMs 324A/C and the loads 20, 22. The power filter 336 is also connected to the active rectifier 316 and HESMs 324A/C. Traditionally, separate power filters were used.

Referring further to Fig. 2, the power control system 312 includes a split DC bus 318 that includes a positive rail 319A that provides a positive voltage, a negative rail 319C that provides a negative voltage, and a ground rail 319B. HESMs 324A and 324C are connected in a "series stacked" configuration in which HESM 324A charges from and discharges onto the positive rail 319A, and HESM 324C charges from and discharges onto the negative rail 319C. The system controller 334 controls each of the DC/DC converters 330A and 330C. Use of the split DC bus 318 is a technique to achieve a desired total bus voltage (e.g., 600 volts) by using smaller positive and negative rail voltages (e.g., +300 volts on positive rail 319A and -300 volts on negative rail 319C).

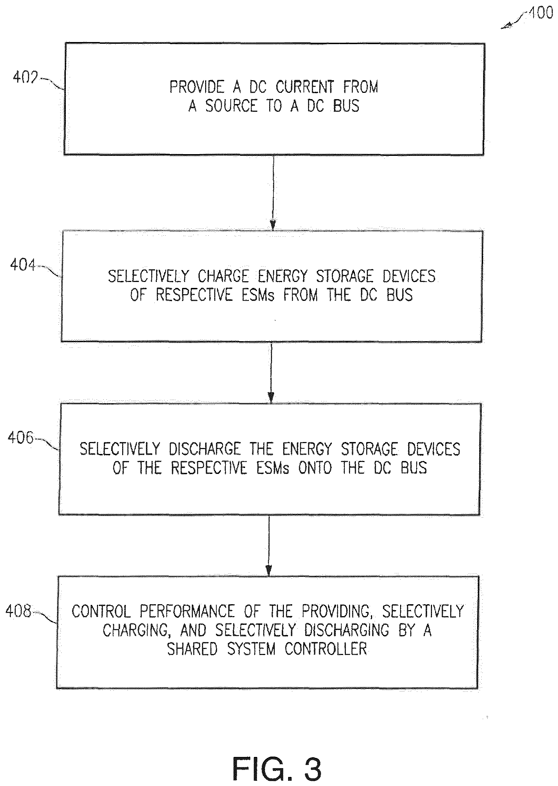

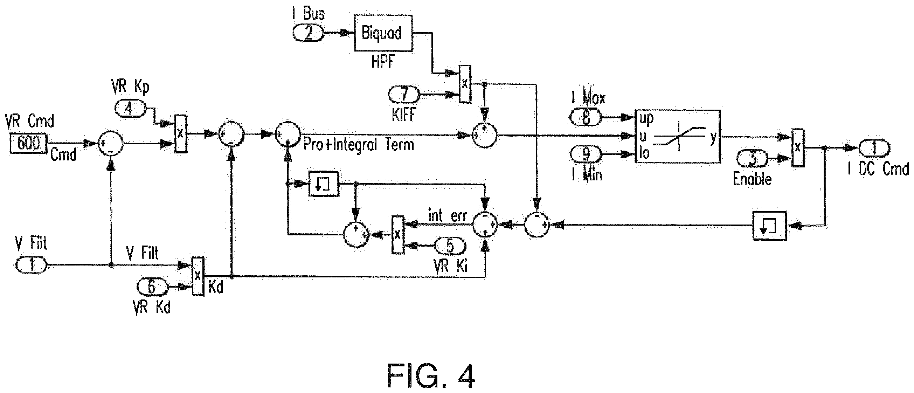

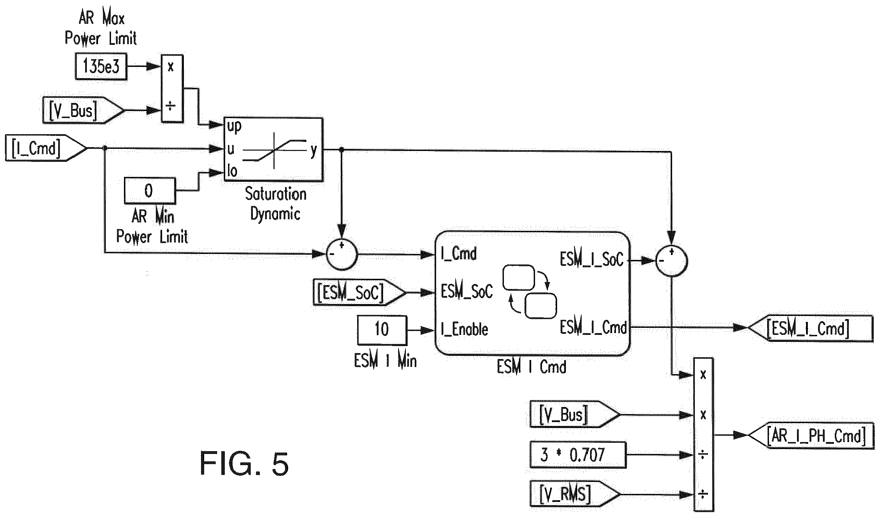

Referring to Figs. 3-5, a flowchart 400 illustrative of an example method of controlling an electrical power system 12. DC current is provided from a source to a DC bus 18 (box 402). Box 402 could include using an active rectifier 316 and/or using a generator control unit to control the DC current. Energy storage devices 332A/C of respective HESMs 324A/C are selectively charged from the DC bus (box 404), and are selectively discharged onto the DC bus (box 406). The system controller 34 controls performance of boxes 402-406. The system controller 34 utilizes a rate limiting function for calculating rate limiting current commands to the active rectifier 116. The rate limiting function includes a low pass filter, a discrete rate limit or is calculated as a function of available power. Fig. 4 shows a schematic view of an algorithm for controlling the electrical power system, showing a possible the voltage regulator command algorithm, and Fig. 5 shows a schematic view of an algorithm for controlling the electrical power system showing a possible active rectifier current controlling command.

The methods and systems of the present disclosure, as described above and shown in the drawings, provide for electrical power system with superior properties including increased reliability and stability, and reduced size, weight, complexity, and/or cost. While the apparatus and methods of the subject disclosure have been showing and described with reference to embodiments, those skilled in the art will readily appreciate that changes and/or modifications may be made thereto without departing from the spirit and scope of the subject disclosure.

## Claims

1. An electrical power system (312), comprising:
a bus current controller operatively connected to a direct current (DC) provided on a DC bus (318);
a high energy storage module (HESM) (324A/C) operatively connected to the DC bus, comprising at least one energy storage device, and a DC/DC converter configured to control charging of the at least one energy storage device from the DC bus and discharging of the at least one energy storage device onto the DC bus; and
a system controller (334) operatively connected to the HESM configured to control the bus current controller and the plurality of DC/DC converters (330A/C).

2. The electrical power system of claim 1, wherein the rectifier and the DC/DC converter are integrated in a single LRU with a common power filter.

3. The electrical power system of any preceding claim, wherein the at least one energy storage device of a first of the HESMs comprises a first type of energy storage device, and the at least one energy storage device of second of the HESMs comprises a second type of energy storage device that is different from the first type of energy storage device.

4. The electrical power system of any preceding claim, wherein the at least one energy storage device of one of the HESMs comprises one or more batteries.

5. The electrical power system of any preceding claim, wherein the at least one energy storage device of one of the HESMs comprises one or more ultracapacitors.

6. The electrical power system of any preceding claim, further comprising a voltage sensor configured to measure a voltage on the DC bus; and
wherein the system controller is configured to control the bus current controller and the DC/DC converter based on DC bus voltage measurements from the voltage sensor.

7. The electrical power system of any preceding claim, wherein the bus current controller comprises an active rectifier configured to rectify alternating current (AC) from a generator to DC on the DC bus.

8. The electrical power system of claim 7, wherein the active rectifier and the DC/DC converter each comprise a plurality of switching legs, each switching leg comprising a pair of switches and controlling connection of a respective input to the DC bus;
wherein the respective inputs of the DC/DC converter each connect to the DC bus; and wherein the respective inputs of the active rectifier comprise respective phases of current from the generator, optionally
further comprising a mounting rack defining a plurality of stacked receiving areas; and
wherein the DC/DC converter, the system controller, and bus current controller are provided on a plurality of circuit boards, each circuit board mounted in one of the stacked receiving areas.

9. The electrical power system of any preceding claim, further comprising a power filter connected to the DC bus, the power filter configured to provide electromagnetic interference (EMI) filtering for the DC current on the DC bus.

10. The electrical power system of any preceding claim, wherein the system controller is configured to discharge at least one of the HESMs onto the DC bus based on activation of a pulse load connected to the DC bus, or wherein the system controller is configured to charge at least one of the HESMs from the DC bus based on a current on the DC bus exceeding a target current level determined by the system controller.

11. The electrical power system of any preceding claim, wherein the DC bus includes a positive rail configured to provide a positive DC voltage, a negative rail configured to provide a negative DC voltage, and a ground rail;
one of the HESMs that includes an energy storage device of a first type is connected to the positive rail and ground rail, but not the negative rail; and
another of the HESMs that includes an energy storage device of the first type is connected to the negative rail and the ground rail, but not the positive rail.

12. A method of controlling an electrical power system comprising:
providing direct current (DC) from a source to a DC bus;
selectively charging energy storage devices of respective high energy storage modules (HESMs) from the DC bus;
selectively discharging the energy storage devices of the respective HESMs onto the DC bus; and
controlling performance of said energy storage devices by providing, selectively charging, and selectively discharging by a system controller.

13. The method of claim 12, wherein providing DC from the source to the DC bus comprises rectifying alternating current (AC) from a generator to DC using an active rectifier; and
controlling performance includes the system controller controlling the active rectifier by an algorithm.

14. The method of claim 12 or 13, wherein selectively discharging includes detecting activation of a pulse load connected to the DC bus; and
discharging at least one of the HESMs onto the DC bus based on the detected activation.

15. The method of any of claims 12 to 14, wherein the system controller utilizes a rate limiting function for calculating rate limiting current commands to the active rectifier, optionally
wherein the rate limiting function includes a low pass filter, a discrete rate limit, and is
calculated as a function of available power.
